# EUROPÄISCHE PATENTSCHRIFT

(11) **EP 2 255 169 B1**
(45) Veröffentlichungstag und Bekanntmachung des Hinweises auf die Patenterteilung: **27.07.2016**
(21) Anmeldenummer: 09722048.7
(22) Anmeldetag: 12.03.2009
(51) Int. Cl.: G01K 7/16, H01C 7/04

(54) **FOLIENSENSOR UND VERFAHREN ZUR HERSTELLUNG EINES FOLIENSENSORS**
FILM SENSOR AND METHOD FOR PRODUCING A FILM SENSOR
CAPTEUR À FILM ET PROCÉDÉ DE FABRICATION D UN CAPTEUR À FILM

(30) Priorität: 19.03.2008 DE 102008014923
(43) Veröffentlichungstag der Anmeldung: 01.12.2010
(73) Patentinhaber: Epcos AG, 81669 München (DE)
(72) Erfinder: KLOIBER, Gerald, A-8073 Feldkirchen (AT); STRALLHOFER, Heinz, A-8530 Deutschlandsberg (AT); HAUT, Jörg, 8524 Bad Gams (AT); KIRSTEN, Lutz, A-8530 Deutschlandsberg (AT)
(74) Vertreter: Epping - Hermann - Fischer
(86) Internationale Anmeldenummer: PCT/EP2009/052944
(87) Internationale Veröffentlichungsnummer: WO 2009/115453

(56) Entgegenhaltungen:
- US-A- 4 317 367

## Beschreibung

Die Erfindung betrifft einen Foliensensor zum Erfassen einer physikalischen Größe.

Aus der Druckschrift US 4,317,367 ist ein Foliensensor bekannt.

Es ist Aufgabe der vorliegenden Erfindung, einen Foliensensor anzugeben, der einfach und kostengünstig hergestellt werden kann.

Die Aufgabe wird durch einen Foliensensor nach Patentanspruch 1 und durch ein Verfahren nach Anspruch 10 gelöst. Vorteilhafte Ausgestaltungen des Foliensensors und des Verfahrens zur Herstellung eines Foliensensors sind Gegenstand von Unteransprüchen.

Es wird ein Foliensensor angegeben, der eine erste Trägerfolie aufweist, wobei die erste Trägerfolie wenigstens eine erste Leiterbahn aufweist. Die erste Leiterbahn ist vorzugsweise als leitfähige Schicht direkt auf der ersten Trägerfolie aufgebracht. Des Weiteren enthält der Foliensensor eine zweite Trägerfolie, die wenigstens eine Leiterbahn aufweist. Diese zweite Leiterbahn des Foliensensors ist vorzugsweise direkt auf der zweiten Trägerfolie aufgebracht. Zwischen der ersten und zweiten Trägerfolie ist wenigstens ein elektrisches Bauelement angeordnet. Das elektrische Bauelement weist vorzugsweise die Eigenschaften einer Funktionskeramik auf. Das elektrische Bauelement ist vorzugsweise mittels der ersten und der zweiten Leiterbahn elektrisch kontaktiert.

Die erste und die zweite Trägerfolie sind mechanisch miteinander verbunden. Bevorzugt sind die Trägerfolien mittels einer Schweißnaht miteinander verbunden. Die Verschweißung kann entweder linienförmig oder aber auch flächig erfolgen. Hierzu wird beispielsweise ein HeißprägeVerfahren oder ein Ultraschallschweiß-Verfahren verwendet.

Bei dem elektrischen Bauelement handelt es sich vorzugsweise um einen keramischen Temperatursensor, der einen negativen Temperaturkoeffizienten aufweist. Vorzugsweise umfasst das elektrische Bauelement eine Keramik, die auf zwei gegenüberliegenden Seiten eine metallisierte Schicht aufweist. Vorzugsweise weist das elektrische Bauelement die Form eines Quaders auf, wobei der Quader auf der Ober- und Unterseite eine metallisierte Schicht umfasst. Das elektrische Bauelement weist in einer Ausführungsform eine Größe der Grundfläche von ungefähr 0,5 * 0,5 mm auf. Die Größe der Grundfläche des elektrischen Bauelements kann in einer weiteren Ausführungsform auch bis zu 2,0 * 2,0 mm betragen. Die Dicke des elektrischen Bauelements beträgt in etwa 0,4 bis 0,6 mm. Die Keramik des elektrischen Bauelements umfasst in einer bevorzugten Ausführungsform eine Metalloxid-Keramik. Es ist jedoch auch möglich, dass die Keramik auch andere geeignete Materialien umfasst. Die metallisierte Schicht kann beispielsweise Gold aufweisen. Des Weiteren ist es auch möglich, dass die metallisierte Schicht Nickel, Silber oder andere Metalle aufweist.

Des Weiteren ist das elektrische Bauelement zusätzlich zur elektrischen Kontaktierung vorzugsweise auch mechanisch mit den Leiterbahnen verbunden. Das elektrische Bauelement kann beispielsweise mittels eines Leitklebers, der Silber umfasst, oder eines Lots mit den Leiterbahnen mechanisch verbunden sein.

Das elektrische Bauelement ist vorzugsweise von den beiden Trägerfolien vollständig nach außen hin umgeben. Die Trägerfolien schließen das elektrische Bauelement nach außen hin nahezu vollständig ab. Das elektrische Bauelement ist damit vor korrosiven Einflüssen durch die Umgebung geschützt.

Die Trägerfolien bestehen vorzugsweise aus einem Kunststoff. Hierbei eignet sich beispielsweise Polypropylen. Des Weiteren sind jedoch auch andere Kunststoffe möglich die dazu geeignet sind, dass Leiterbahnen auf der Trägerfolie, beispielsweise durch Heißprägen oder galvanische Abscheidung, aufgebracht werden können.

Die Trägerfolien weisen vorzugsweise eine Stärke im Bereich zwischen 50 und 500 µm auf. In einer bevorzugten Ausführungsform weisen die Trägerfolien eine Stärke zwischen 200 und 300 µm auf.

Die Leiterbahnen enthalten vorzugsweise Kupfer. Es ist jedoch auch möglich, dass die Leiterbahnen aus einem anderen elektrisch leitfähigen Material bestehen.

In einer bevorzugten Ausführungsform weisen die Trägerfolien einen Bereich auf, bei dem die Leiterbahnen von außen kontaktiert werden können. Bevorzugt sind die Bereiche derart angeordnet, dass bei übereinander gelegten Trägerfolien die Leiterbahnen an den Enden der Trägerfolien von außen kontaktiert werden können. Vorzugsweise ist der elektrische Anschlussbereich des Foliensensors an dem Ende des Foliensensors angeordnet, der dem Ende mit dem elektrischen Bauelement gegenüberliegt. Die elektrische Kontaktierung des Foliensensors kann somit über die freiliegenden Enden der Leiterbahnen erfolgen, wobei durch die Trägerfolien weiterhin eine ausreichende Stabilität des Kontaktbereichs gewährleistet ist.

Zur Herstellung eines Foliensensors wird ein Verfahren mit folgenden Schritten angegeben: Auf zwei bereitgestellte Trägerfolien wird jeweils wenigstens eine Leiterbahn aufgebracht. Ein elektrisches Bauelement wird dann an den Leiterbahnen elektrisch kontaktiert. Die Trägerfolien werden anschließend mechanisch miteinander verbunden, wobei sich das elektrische Bauelement zwischen den beiden Trägerfolien befindet.

Die Leiterbahnen werden beispielsweise mittels Heißprägen auf die Trägerfolien aufgebracht.

In einer weiteren Ausführungsform werden die Leiterbahnen mittels galvanischer Abscheidung auf den Trägerfolien aufgebracht.

Es ist jedoch auch möglich, die elektrischen Leiterbahnen mittels anderer geeigneter Verfahren auf die Trägerfolien aufzubringen.

Das elektrische Bauelement wird mittels eines Leitklebers mit den Leiterbahnen elektrisch kontaktiert. Es ist jedoch auch möglich, das elektrische Bauelement mittels eines Lots mit den Leiterbahnen zu verbinden.

Vorzugsweise werden die Trägerfolien mittels Ultraschall-Schweißens miteinander verbunden.

In einer weiteren Ausführungsform können die Trägerfolien auch mittels Heißprägens miteinander verbunden werden.

Das elektrische Bauelement ist somit durch die beiden Trägerfolien nach außen hin gegen Umwelteinflüsse abgedichtet.

Durch ein wie oben beschriebenes Verfahren lässt sich somit ein Foliensensor herstellen, der einen einfachen Aufbau aufweist und mit wenigen Verfahrensschritten kostengünstig hergestellt werden kann.

Vorzugsweise wird der Foliensensor als Fieberthermometer eingesetzt. Hierbei ist Polypropylen als Material für die Trägerfolien besonders gut geeignet. Polypropylen weist beispielsweise eine Zulassung der Arzneimittelzulassungsbehörde der USA auf und genügt somit den Anforderungen für medizinische Zwecke. Der Foliensensor weist für diese Zwecke beispielsweise einen Einsatzbereich zwischen -25 °C und 50 °C auf. Prinzipiell ist es aber auch möglich, dass der Foliensensor einen größeren Einsatzbereich aufweist. Der Einsatzbereich ist vorwiegend von dem Material der Trägerfolien und dem verwendeten Temperatursensor abhängig.

Die oben beschriebenen Gegenstände und Verfahren werden an den folgenden Figuren und Ausführungsbeispiele näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein. Elemente die einander gleichen oder die die gleiche Funktion übernehmen sind mit den gleichen Bezugszeichen bezeichnet.
- Figur 1: zeigt schematisch eine erste Trägerfolie mit einer ersten Leiterbahn und einem elektrischen Bauelement,
- Figur 2: zeigt schematisch eine zweite Trägerfolie mit einer zweiten Leiterbahn,
- Figur 3: zeigt schematisch einen Foliensensor in einer Ansicht von oben, mit einem elektrischen Bauelement, das mittels zweier Leiterbahnen kontaktiert ist,
- Figur 4: zeigt eine schematische einen Foliensensor in einer Seitenansicht,
- Figur 5: zeigt schematisch den Kontaktbereich des Foliensensors.

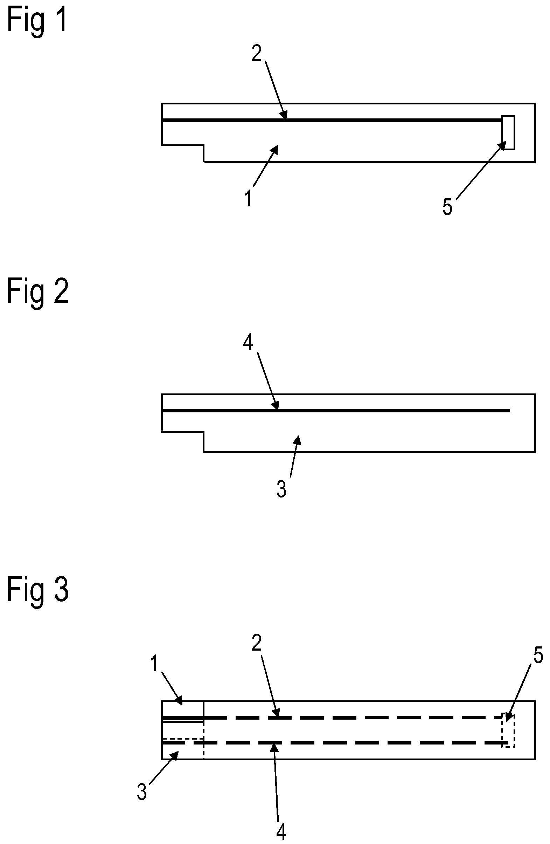

Die Figur 1 zeigt eine schematische Skizze einer ersten Trägerfolie 1 eines Ausführungsbeispiels des Foliensensors. Auf die erste Trägerfolie 1 ist eine erste Leiterbahn 2 aufgebracht. Die erste Leiterbahn 2 ist vorzugsweise mittels Heißprägens oder mittels galvanischer Abscheidung auf der ersten Trägerfolie 1 aufgebracht. Die erste Leiterbahn 2 kann auch in die Oberfläche der ersten Trägerfolie 1 eingebracht sein, so dass ein Teil der Leiterbahn 2 in einer Vertiefung der ersten Trägerfolie 1 angeordnet ist.

Beim Aufbringen der ersten Leiterbahn 2 mittels Heißprägens wird die erste Leiterbahn 2 durch ein kurzzeitiges Anschmelzen der Oberfläche der ersten Trägerfolie 1 teilweise in die erste Trägerfolie 1 eingebracht.

Auf der ersten Trägerfolie 1 ist ein elektrisches Bauelement 5 angeordnet. Vorzugsweise ist die erste Leiterbahn 2 derart angeordnet, dass die erste Leiterbahn 2 wenigstens im Bereich des elektrischen Bauelements 5, beziehungsweise im Bereich der elektrischen Kontakte des elektrischen Bauelements 5, zumindest teilweise aus der ersten Trägerfolie 1 herausragt. Vorzugsweise ragt die erste Leiterbahn 2 soweit aus der ersten Trägerfolie 2 heraus, dass gewährleistet ist, dass das elektrische Bauelement 5 ausreichend gut mit der ersten Leiterbahn 2 verbunden ist.

Das elektrische Bauelement 5 ist vorzugsweise in einem Endbereich der lang gestreckten Trägerfolie 1 angeordnet. Das elektrische Bauelement 5 ist vorzugsweise derart angeordnet, dass es einen ausreichenden Abstand vom Rand der Trägerfolie 1 aufweist, so dass die Schweißverbindung zwischen den beiden Trägerfolie 1, 3 vorzugsweise um das elektrische Bauelement 5 herumlaufend angeordnet ist.

Das elektrische Bauelement 5 ist vorzugsweise mittels eines elektrisch leitfähigen Klebers mechanisch mit der ersten Leiterbahn 2 verbunden. Das elektrische Bauelement 5 kann auch mittels eines Lots mit der ersten elektrischen Leiterbahn 2 verbunden sein. Die mechanische Verbindung zwischen der ersten elektrischen Leiterbahn 2 und dem elektrischen Bauelement 5 dient auch zur elektrischen Kontaktierung des elektrischen Bauelements 5 mit der ersten Leiterbahn 2.

In der Figur 2 ist eine schematische Skizze einer zweiten Trägerfolie 3 eines Ausführungsbeispiels des Foliensensors dargestellt. Die zweite Trägerfolie 3 weist eine zweite Leiterbahn 4 auf. Die zweite Leiterbahn 4 kann wie schon zuvor in der Figur 1 für die erste Leiterbahn beschrieben, auf, oder teilweise in der zweiten Trägerfolie eingebracht sein.

In Figur 3 ist eine schematische Ansicht eines Ausführungsbeispiels eines Foliensensors von oben dargestellt. Die erste 1 und zweite 3 Trägerfolie des Foliensensors sind übereinander gelegt, so dass sich die erste 1 und zweite 3 Trägerfolie vorzugsweise annähernd bündig überdecken. Die Leiterbahnen 2, 4 der Trägerfolien 1, 3 sind vorzugsweise derart angeordnet, dass die erste 2 und zweite 4 Leiterbahn beim Übereinanderlegen der ersten 1 und zweiten 3 Trägerfolie nicht übereinander zum liegen kommen. Die erste 2 und zweite 4 Leiterbahn sind vorzugsweise seitlich voneinander beabstandet. Vorzugsweise sind die erste 2 und zweite Leiterbahn 4 parallel zueinander angeordnet. Wenigstes im Bereich des elektrischen Bauelements 5 beträgt der Abstand zwischen der ersten 2 und zweiten 4 Leiterbahn vorzugsweise annähernd dem Abstand der elektrischen Kontakte des elektrischen Bauelements 5.

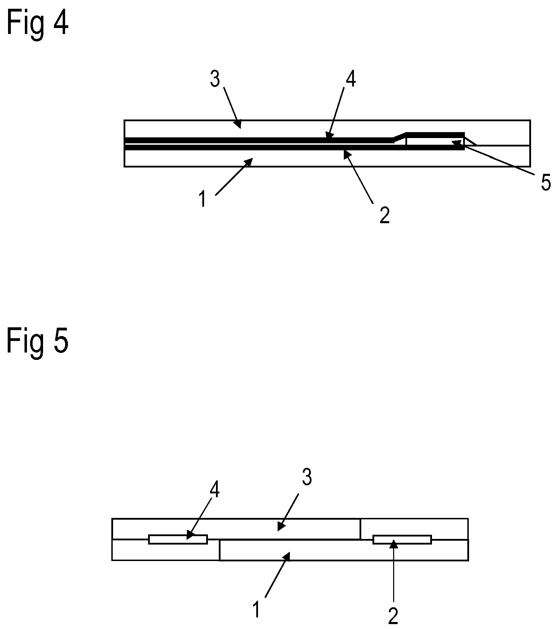

Die Figur 4 zeigt eine schematische Seitenansicht eines Ausführungsbeispiels eines Foliensensors. Der Foliensensor weist eine erste Trägerfolie 1 mit einer ersten Leiterbahn 2 und eine zweite Trägerfolie 3 mit einer zweiten Leiterbahn 4 auf. Zwischen den Trägerfolien 1, 3 ist ein elektrisches Bauelement 5 angeordnet. Das elektrische Bauelement 5 ist vorzugsweise im Endbereich der Trägerfolien 1, 3 angeordnet, wobei das elektrische Bauelement 5 vorzugsweise derart angeordnet ist, dass es vom Rand der Trägerfolien 1, 3 beabstandet ist. Durch die Trägerfolien 1, 3 ist das elektrische Bauelement 5 allseitig nach außen hin abgedichtet. Dadurch ist das elektrische Bauelement vor Korrosion durch Umwelteinflüsse geschützt. Die in Figur 4 dargestellten Leiterbahnen 2, 4 sind nicht direkt übereinander angeordnet, sondern weisen, wie auch in Figur 3 dargestellt, einen seitlichen Versatz zueinander auf.

Die Figur 5 zeigt eine schematische Skizze des Endbereichs eines Foliensensors. Der Foliensensor weist zwei Trägerfolien 1, 3 auf, die mechanisch miteinander verbunden sind. Die Trägerfolien 1, 3 sind vorzugsweise übereinander angeordnet, wobei auf den Trägerfolien 1, 3 Leiterbahnen 2, 4 angeordnet sind. Die Leiterbahnen 2, 4 sind vorzugsweise auf der Seite der Trägerfolien 1, 3 angeordnet, die einander zugewandt sind. Durch einen seitlichen Versatz der Leiterbahnen 2, 4 voneinander ist für eine ausreichende Isolierung der Leiterbahnen 2, 4 gesorgt. Im Endbereich des Foliensensors, der in Figur 5 dargestellt ist, liegen die Enden der Trägerfolien 1, 3 mit den Leiterbahnen 2, 4 frei. Die Enden der Leiterbahnen 2, 4 sind in diesem Bereich von außen von wenigstens einer Seite frei zugänglich und somit elektrisch kontaktierbar. Dadurch, dass die Leiterbahnen 2, 4 in dem Endbereich von wenigstens einer Seite durch die die Trägerfolien 1, 3 gestützt werden, weist der Kontaktbereich des Foliensensors eine ausreichend hohe Stabilität auf. Der Kontaktbereich des Foliensensors kann somit beispielsweise in einen passenden Anschlusskontakt eingeschoben werden, ohne dass die Enden der Leiterbahnen 2, 4 umknicken würden oder anderweitig beschädigt werden.

Obwohl in den Ausführungsbeispielen nur eine beschränkte Anzahl möglicher Weiterbildung der Erfindung beschrieben werden konnte ist die Erfindung nicht auf diese beschränkt. Es ist prinzipiell möglich, dass der Foliensensor mehr als ein elektrisches Bauelement, beziehungsweise mehrere Leiterbahnen aufweist, so dass beispielsweise zwei elektrische Bauelemente eine gemeinsame erste Leitebahn aufweisen, und jeweils getrennt voneinander jeweils eine weitere zweite Leiterbahn aufweisen.

Die Erfindung ist nicht auf die Anzahl der dargestellten Elemente beschränkt.

Die Beschreibung der hier angegebenen Gegenstände ist nicht auf die einzelnen speziellen Ausführungsformen beschränkt vielmehr können die Merkmale der einzelnen Ausführungsformen soweit technisch sinnvoll beliebig miteinander kombiniert werden.

### Bezugszeichenliste

- 1: erste Trägerfolie
- 2: erste Leiterbahn
- 3: zweite Trägerfolie
- 4: zweite Leiterbahn
- 5: elektrisches Bauelement

## Patentansprüche

1. Foliensensor
- mit einer ersten Trägerfolie (1), die wenigstens eine erste Leiterbahn (2) aufweist,
- mit einer zweiten Trägerfolie (3), die wenigstens eine zweite Leiterbahn (4) aufweist,
- wobei zwischen der ersten (1) und zweiten (3) Trägerfolie wenigstens ein elektrisches Bauelement (5) angeordnet ist,
- wobei das elektrische Bauelement (5) die Eigenschaften einer Funktionskeramik aufweist, und
- wobei das elektrische Bauelement (5) mittels wenigstens einer ersten (2) und wenigstens einer zweiten (4) Leiterbahn elektrisch kontaktiert ist,
**gekennzeichnet dadurch, dass**
die erste Leiterbahn (2) teilweise in eine Oberfläche der ersten Trägerfolie (1) und/oder die zweite Leiterbahn (4) teilweise in eine Oberfläche der zweiten Trägerfolie (3) eingebracht ist.

2. Foliensensor nach Anspruch 1, wobei die erste (1) und die zweite (3) Trägerfolie mechanisch miteinander verbunden sind.

3. Foliensensor nach einem der vorhergehenden Ansprüche, wobei das elektrische Bauelement (5) einen negativen Temperaturkoeffizienten aufweist.

4. Foliensensor nach einem der vorhergehenden Ansprüche, wobei das elektrische Bauelement (5) mechanisch mit den Leiterbahnen (2, 4) verbunden ist.

5. Foliensensor nach einem der vorhergehenden Ansprüche, wobei das elektrische Bauelement (5) nach außen vollständig von den Trägerfolien (1, 3) umgeben ist.

6. Foliensensor nach einem der vorhergehenden Ansprüche, wobei die Trägerfolien (1, 3) einem Kunststoff beinhalten.

7. Foliensensor nach Anspruch 6, wobei die Trägerfolien (1, 3) Polypropylen beinhalten.

8. Foliensensor nach einem der vorhergehenden Ansprüche, wobei die Leiterbahnen (2, 4) Kupfer enthalten.

9. Foliensensor nach einem der vorhergehenden Ansprüche, wobei die Leiterbahnen (2, 4) an einem Ende des Foliensensors von außen elektrisch kontaktierbar sind.

10. Verfahren zur Herstellung eines Foliensensors nach einem der Ansprüche 1 bis 9, aufweisend die Schritte:
- Aufbringen von jeweils wenigstens einer Leiterbahn (2, 4) auf zwei bereitgestellte Trägerfolien (1, 3), wobei die Leiterbahnen (2, 4) mittels Heißprägen aufgebracht werden,
- Kontaktieren eines elektrische Bauelement (5) an den Leiterbahnen (2, 4), und
- anschließendes mechanisches Verbinden der Trägerfolien (1, 3), wobei das elektrische Bauelement (5) zwischen den Trägerfolien (1, 3) eingeschlossen wird.

11. Verfahren nach Anspruch 10, wobei das elektrische Bauelement (5) mittels eines Leitklebers mit den Leiterbahnen (2, 4) kontaktiert wird.

12. Verfahren nach einem der Ansprüche 10 oder 11, wobei die Trägerfolien (1, 3) mittels US-Schweißens miteinander verbunden werden.

13. Verfahren nach einem der Ansprüche 10 bis 12, wobei die Trägerfolien (1, 3) mittels Heißprägens miteinander verbunden werden.

## Claims

1. Film sensor
- having a first carrier film (1) which has at least one first conductor track (2),
- having a second carrier film (3) which has at least one second conductor track (4),
- at least one electrical component (5) being arranged between the first carrier film (1) and the second carrier film (3),
- the electrical component (5) having the properties of a functional ceramic, and
- the electrical component (5) being electrically contact-connected by means of at least one first conductor track (2) and at least one second conductor track (4),
**characterized in that**
the first conductor track (2) is partially introduced into a surface of the first carrier film (1) and/or the second conductor track (4) is partially introduced into a surface of the second carrier film (3).

2. Film sensor according to Claim 1, the first carrier film (1) and the second carrier film (3) being mechanically connected to one another.

3. Film sensor according to one of the preceding claims, the electrical component (5) having a negative temperature coefficient.

4. Film sensor according to one of the preceding claims, the electrical component (5) being mechanically connected to the conductor tracks (2, 4).

5. Film sensor according to one of the preceding claims, the electrical component (5) being completely surrounded toward the outside by the carrier films (1, 3).

6. Film sensor according to one of the preceding claims, the carrier films (1, 3) comprising a plastic.

7. Film sensor according to Claim 6, the carrier films (1, 3) comprising polypropylene.

8. Film sensor according to one of the preceding claims, the conductor tracks (2, 4) containing copper.

9. Film sensor according to one of the preceding claims, the conductor tracks (2, 4) being able to be electrically contact-connected from the outside at one end of the film sensor.

10. Method for producing a film sensor, according to one of Claims 1 to 9, having the following steps:
- at least one conductor track (2, 4) is applied to two provided carrier films (1, 3) in each case, the conductor tracks (2, 4) being applied by means of hot-stamping,
- an electrical component (5) is contact-connected on the conductor tracks (2, 4), and
- the carrier films (1, 3) are subsequently mechanically connected, the electrical component (5) being enclosed between the carrier films (1, 3).

11. Method according to Claim 10, the electrical component (5) being contact-connected to the conductor tracks (2, 4) by means of a conductive adhesive.

12. Method according to either of Claims 10 and 11, the carrier films (1, 3) being connected to one another by means of ultrasonic welding.

13. Method according to one of Claims 10 to 12, the carrier films (1, 3) being connected to one another by means of hot-stamping.

## Revendications

1. Détecteur en feuille présentant
- une première feuille de support (1) qui présente au moins une premier piste conductrice (2),
- une deuxième feuille de support (3) qui présente au moins une deuxième piste conductrice (4),
- au moins un composant électrique (5) étant disposé entre la première feuille de support (1) et la deuxième feuille de support (3),
- le composant électrique (5) présentant des propriétés d'une céramique fonctionnelle et
- le composant électrique (5) étant mis en contact électrique au moyen d'au moins une première piste conductrice (2) et d'au moins une deuxième piste conductrice (4),
**caractérisé en ce que**
la première piste conductrice (2) est ménagée en partie dans une surface de la première feuille de support (1) et/ou
**en ce que** la deuxième piste conductrice (4) est ménagée en partie dans une surface de la deuxième feuille de support (3).

2. Détecteur en feuille selon la revendication 1, dans lequel la première feuille de support (1) et la deuxième feuille de support (3) sont reliées l'une à l'autre mécaniquement.

3. Détecteur en feuille selon l'une des revendications précédentes, dans lequel le composant électrique (5) présente un coefficient de température négatif.

4. Détecteur en feuille selon l'une des revendications précédentes, dans lequel le composant électrique (5) est relié mécaniquement aux pistes conductrices (2, 4).

5. Détecteur en feuille selon l'une des revendications précédentes, dans lequel le composant électrique (5) est entouré complètement par les feuilles de support (1, 3) de l'extérieur.

6. Détecteur en feuille selon l'une des revendications précédentes, dans lequel les feuilles de support (1, 3) contiennent une matière synthétique.

7. Détecteur en feuille selon la revendication 6, dans lequel les feuilles de support (1, 3) contiennent du polypropylène.

8. Détecteur en feuille selon l'une des revendications précédentes, dans lequel les pistes conductrices (2, 4) contiennent du cuivre.

9. Détecteur en feuille selon l'une des revendications précédentes, dans lequel les pistes conductrices (2, 4) sont mises en contact électrique de l'extérieur à une extrémité du capteur en feuille.

10. Procédé de fabrication d'un capteur en feuille selon l'une des revendications 1 à 9, le procédé comportant les étapes qui consistent à :
- appliquer chaque fois au moins une piste conductrice (2, 4) sur deux feuilles de support (1, 3) qui ont été préparées, les pistes conductrices (2, 4) étant appliquées par gaufrage à chaud,
- mettre un composant électrique (5) en contact avec les pistes conductrices (2, 4) et
- ensuite, lier mécaniquement les feuilles de support (1, 3), le composant électrique (5) étant enfermé entre les feuilles de support (1, 3).

11. Procédé selon la revendication 10, dans lequel le composant électrique (5) est mis en contact avec les pistes conductrices (2, 4) au moyen d'un adhésif conducteur.

12. Procédé selon l'une des revendications 10 ou 11, dans lequel les feuilles de support (1, 3) sont reliées l'une à l'autre par soudage aux ultrasons.

13. Procédé selon l'une des revendications 10 à 12, dans lequel les feuilles de support (1, 3) sont reliées l'une à l'autre par gaufrage à chaud.
